# EUROPÄISCHE PATENTSCHRIFT

(11) **EP 1 537 172 B1**
(45) Veröffentlichungstag und Bekanntmachung des Hinweises auf die Patenterteilung: **08.03.2006**
(21) Anmeldenummer: 03790815.9
(22) Anmeldetag: 25.07.2003
(51) Int. Cl.: C08K 5/00

(54) **STABILISIERTE BLOCKCOPOLYMERE AUS STYROLMONOMER UND DIENMONOMER**
STABILISED BLOCK COPOLYMERS MADE FROM STYROL MONOMERS AND DIENE MONOMERS
COPOLYMERES SEQUENCES STABILISES FORMES A PARTIR DE MONOMERE DE STYRENE ET DE MONOMERE DE DIENE

(30) Priorität: 29.08.2002 DE 10240578
(43) Veröffentlichungstag der Anmeldung: 08.06.2005
(73) Patentinhaber: BASF Aktiengesellschaft, 67056 Ludwigshafen (DE)
(72) Erfinder: KNOLL, Konrad, 67069 Ludwigshafen (DE); DARDIN, Ulrike, 69514 Laudenbach (DE); DESBOIS, Philippe, 67487 Maikammer (DE); MITULLA, Konrad, 67071 Ludwigshafen (DE); NAEGELE, Paul, 67166 Otterstadt (DE)
(86) Internationale Anmeldenummer: PCT/EP2003/008189
(87) Internationale Veröffentlichungsnummer: WO 2004/020512

(56) Entgegenhaltungen:
- EP-A- 1 170 296
- WO-A-01/90244
- GB-A- 2 322 374
- US-A- 5 488 117

## Beschreibung

Die Erfindung betrifft ein Verfahren zur Herstellung von thermoplastischen formmassen enthaltend, wobei sich die Summe zu 100 Gew.-% ergänzt,
a) mindestens ein Blockcopolymer A, enthaltend in polymerisierter Form, bezogen auf A,
   a1) 50 bis 90 Gew.-% mindestens eines Styrolmonomeren, und
   a2) 10 bis 50 Gew.-% mindestens eines Dienmonomeren,

   und als Stabilisatoren, bezogen auf die Formmasse,
b) 0,001 bis 0,18 Gew.-% mindestens eines Benzofuranonderivats B,
c) 0,05 bis 1 Gew.-% mindestens eines organischen Phosphits C, und
d) 0,1 bis 0,3 Gew.-% mindestens einer Stabilisatorverbindung D ausgewählt aus sterisch gehinderten Phenolen und aromatischen Aminen, wobei während der Herstelung die formmasse durch Zugabe von CO₂ und Wasser auf einem pH-Wert von 3 bis 7 eingestellt wird.

Alterungserscheinungen bei Polymeren können bei deren Herstellung, Lagerung, Verarbeitung zu Formteilen, oder Gebrauch der Formteile auftreten und beruhen in der Regel auf Oxidationsreaktion, z.B. Angriff des Polymeren durch Luftsauerstoff, ggf. verstärkt durch Lichteinwirkung (UV-Strahlung). Insbesondere Polymere auf Basis von Dienen, wie Kautschuke oder kautschukhaltige Thermoplaste wie Blockcopolymere enthaltend z.B. Butadienblöcke und Styrolblöcke, sind alterungsempfindlich. Die oxidative Alterung verschlechtert die optischen und mechanischen Eigenschaften der Polymere (z.B. Eintrübung transparenter Polymere, Vergilbung; Abnahme von Schlagzähigkeit, Bruchdehnung und Elastizität) bis zur Unbrauchbarkeit.

Zur Stabilisierung der Polymere gegen oxidative Alterung werden üblicherweise Antioxidantien verwendet. Man unterscheidet üblicherweise aufgrund des verschiedenen Wirkungsmechanismus primäre Antioxidantien wie z.B. sterisch gehinderte Phenole und sekundäre aromatische Amine, und sekundäre Antioxidantien wie z.B. Phosphite und Thioether. Die genannten Verbindungsklassen umfassen zahlreiche Einzelverbindungen unterschiedlicher Struktur, siehe beispielhaft R. Gächter, H. Müller: Plastic Additives Handbook, 4th edition, Hanser 1993, Reprint Nov. 1996, Seiten 1 bis 128 und darin insbesondere Seiten 40 bis 48.

Vielfach verwendet man Mischungen verschiedener Antioxidantien - z.B. primäre gemischt mit sekundären Antioxidantien - und erzielt damit synergistische Wirkungen, indem sich die Wirkungen der Einzelkomponenten gegenseitig verstärken.

Styrol-Butadien-Blockcopolymere weisen üblicherweise eine kokontinuierliche Lamellen- oder Zylinder-Morphologie auf (im Gegensatz zur Teilchen-Morphologie von schlagzähem Polystyrol oder Acrylnitril-Butadien-Styrol-Polymer) und sind besonders empfindlich gegen oxidative Alterung, da die Kautschuklamellen bzw. -zylinder insbesondere während der Polymerverarbeitung hohen Belastungen ausgesetzt sind. So treten bei der Extrusion oder beim Spritzgießen hohe Scherkräfte auf, die zu einem verstärkten thermisch-oxidativen Abbau des Polymeren führen. Diese Alterung macht sich insbesondere durch Gelbildung des Polymeren bemerkbar: durch die Abbaureaktionen entstehen Gele im Polymeren, die sich im Formteil als störende Gelpartikel mit Stippenbildung oder anderen Oberflächendefekten bemerkbar machen.

Die US-PS 4 584 346 lehrt Styrol-Butadien-Blockcopolymere enthaltend Tris(nonylphenyl)phosphit (TNPP) der weiter unten angegebenen Formel II und Irganox® 1076, ein sterisch gehindertes Phenol der weiter unten angegebenen Formel IV.

Die EP-A 263 524 offenbart Stabilisatorgemische aus einem Chromanderivat und einem organischen Phosphit.

In der EP-A 210 046 werden thermisch beständige Butadienpolymere beschrieben, die u.a. ein sterisch gehindertes Phenol als Stabilisator enthalten.

Die US-PS 5 516 920 und 5 428 162 offenbaren bestimmte 3-Arylbenzofuranone, auch solche der weiter unten angegebenen Formeln Ia bzw. Ib, und deren Verwendung zur Stabilisierung von u.a. Styrol-Butadien-Blockcopolymeren. Siehe Beispiel 11 in Spalte 41 der genannten US-PS 5 516 920, und Spalte 41, Zeile 42. In Spalte 28 nennt diese Schrift als Costabilisatoren sterisch gehinderte Phenole, und in Spalte 32, Zeilen 40 bis 58, Phosphite.

In der GB-A 2 333 296 werden alterungsempfindliche Elastomere, u.a. (auf S. 24, Zeile 1) Styrol-Butadien-Blockcopolymere, beschrieben, die mit 0,2 bis 10 Gew.-% Benzofuranonverbindungen stabilisiert sind. Als Costabilisatoren werden sterisch gehinderte Phenole auf Seite 24 bis 27, und Phosphite auf Seite 31, genannt.

Nachteilig an den genannten Stabilisierungen ist ihre für manche Anwendungen unzureichende Wirksamkeit. Insbesondere bei hohen Temperaturen (z.B. über 200°C) versagt die Stabilisierung oftmals. Außerdem sind hohe Mengen der einzelnen - vergleichsweise teuren - Stabilisatoren erforderlich. Damit verteuert sich das Endprodukt in nachteiliger Weise.

Die Research Disclosure 39615, April 1997, Seiten 223 bis 228, offenbart die Stabilisierung von Schmelzklebstoffen aus u.a Styrol-Butadien-Blockcopolymeren, mit einer Mischung aus Benzofuranonderivaten, organischen Phosphiten und sterisch gehinderten Phenolen: zur Stabilisierung gegen eine bei 170°C stattfindende Alterung werden 0,8 Gew.-% Irganox® B225 und 0,2 Gew.-% HP 136 verwendet. Irganox® B225 ist eine 1:1-Mischung von Irganox® 1010, sterisch gehindertes Phenol der weiter unten angegebenen Formel III, und Irgafos® 168, Tris(nonylphenyl)-phosphit der Formel II. HP 136 ist ein Benzofuranonderivat der weiter unten genannten Formel Ia. Wiederum sind hier größere Mengen der teuren Additive erforderlich, insbesondere 0,2 Gew.-% Benzofuranonderivat und 0,4 Gew.-% sterisch gehindertes Phenol, und diese reichen auch nur zur Stabilisierung bei geringen Verarbeitungstemperaturen . (lediglich 170°C) aus.

Es bestand die Aufgabe, den geschilderten Nachteilen abzuhelfen. Insbesondere sollten stabilisierte Blockcopolymere aus Styrol- und Dienmonomeren bereitgestellt werden, die gegenüber dem Stand der Technik verringerte Stabilisatorgehalte aufweisen und damit einen ökonomischen Vorteil bieten.

Außerdem sollten die Blockcopolymere trotz der verringerten Stabilisatorgehalte zuverlässig gegen Alterung, und Abbau bei der Verarbeitung, stabilisiert sein. Die Stabilisierung sollte auch bei hohen Temperaturen (über 200°C) und bei hohen Scherkräften noch wirksam sein.

Insbesondere sollten die Blockcopolymere einen geringen Gelgehalt aufweisen.

Schließlich bestand die Aufgabe, stabilisierte Blockcopolymere bereitzustellen, die bei Verarbeitungstemperaturen von 200 bis 280°C und hohen Scherkräften (z.B. Extrusion) eine verminderte Gelbildung aufweisen.

Demgemäß wurde das eingangs definierte verfahren zur Herstellung von thermoplastischen Formmassen gefunden.

Bevorzugte Ausgestaltungen der Erfindung sind den Unteransprüchen zu entnehmen.

Keines der zum Stand der Technik genannten Dokumente offenbart ein derartige verfahren.

### Komponente A

Komponente A ist mit einem Anteil in den Formmassen enthalten, der sich mit den anderen Komponenten der Formanasse zu 100 Gew.-% ergänzt.

A ist ein Blockcopolymer, enthaltend in polymerisierter Form, bezogen auf A,
a1) 50 bis 90, bevorzugt 60 bis 85 und insbesondere 70 bis 85 Gew.-% mindestens eines Styrolmonomeren, und
a2) 10 bis 50, bevorzugt 15 bis 40 und insbesondere 15 bis 30 Gew.-% mindestens eines Dienmonomeren.

Als Styrolmonomere können neben oder in Mischung mit Styrol, auch vinylaromatische Monomere verwendet werden, die am aromatischen Ring und/oder an der C=C-Doppelbindung mit C₁₋₂₀-Kohlenwasserstoffresten substituiert sind. Bevorzugt verwendet man Styrol, α-Methylstyrol, p-Methylstyrol, Ethylstyrol, tert.-Butylstyrol, Vinyltoluol, 1,2-Diphenylethylen, 1,1-Diphenylethylen oder deren Mischungen. Besonders bevorzugt wird Styrol eingesetzt.

Als Dienmonomere kommen z.B. 1,3-Butadien, 2,3-Dimethylbutadien, 1,3-Pentadien, 1,3-Hexadien, Isopren und Piperylen in Betracht. 1,3-Butadien und Isopren sind bevorzugt, insbesondere 1,3-Butadien (nachfolgend kurz als Butadien bezeichnet).

Zweckmäßigerweise setzt man die Monomeren und sonstige Einsatzstoffe wie z.B.. Lösungsmittel, in der verfahrenstypisch erforderlichen Reinheit ein, d.h. man entfernt störende Begleitstoffe wie Restfeuchte, polare Stoffe, Sauerstoff unmittelbar vor der Polymerisation in an sich bekannter Weise.

Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren.

Geeignete Comonomere sind z.B. Acrylate, insbesondere C₁₋₁₂-Alkylacrylate wie n-Butylacrylat oder 2-Ethylhexylacrylat, und die entsprechenden Methacrylate, insbesondere C₁₋₁₂-Alkylmethacrylate wie Methylmethacrylat (MMA). Außerdem sind die in der DE-A 196 33 626 auf S. 3, Z. 5-50 unter M1 bis M10 genannten Monomere als Comonomere geeignet. Es wird ausdrücklich auf diese Schrift verwiesen.

Bevorzugt verwendet man als Styrolmonomer Styrol und als Dienmonomer Butadien, d.h. bevorzugt ist das Blockcopolymer A ein Styrol-Butadien-Blockcopolymer.

In der Regel werden die - als solche bekannten - Blockcopolymere durch anionische Polymerisation in an sich bekannter Weise hergestellt.

Üblicherweise werden als Initiatoren für die anionische Polymerisation mono-, bi- oder multifunktionellen Alkalimetallalkyle, -aryle oder -aralkyle eingesetzt. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-Dilithio-2-buten oder 1,4-Dilithiobenzol. Die benötigte Menge an Alkalimetallorganyl richtet sich nach dem gewünschten Molekulargewicht, der Art und Menge der weiteren eingesetzten Metallorganyle sowie der Polymerisationstemperatur. In der Regel liegt sie im Bereich von 1 ppm(w) bis 2 Gew.-%, bevorzugt 100 ppm(w) bis 1 Gew.%, insbesondere 1000 bis 5000 ppm(w), bezogen auf die Gesamtmonomerenmenge.

Die Polymerisation kann in Abwesenheit (Massepolymerisation) oder in Gegenwart (Lösungspolymerisation) eines Lösungsmittels durchgeführt werden. Die - bevorzugte - Lösungspolymerisation erfolgt zweckmäßigerweise in einem aliphatischen, isocyclischen oder aromatischen Kohlenwasserstoff oder Kohlenwasserstoffgemisch, wie Benzol, Toluol, Ethylbenzol, Xylol, Cumol, Pentan, Heptan, Octan, Cyclohexan oder Methylcyclohexan. Bevorzugt werden Lösungsmittel mit einem Siedepunkt oberhalb 95°C verwendet. Besonders bevorzugt wird Toluol verwendet.

Zur Kontrolle der Reaktionsgeschwindigkeit können bei Bedarf polymerisationsgeschwindigkeitsvermindernde Zusätze, sogenannte Retarder wie in WO 98/07766 beschrieben, zugegeben werden. Zwingend erforderlich sind Retarder jedoch nicht. Als Retarder eignen sich beispielsweise Metallorganyle eines Elementes des Periodensystems. Beispielsweise können die Organyle der Elemente Be, Mg, Ca, Sr, Ba, B, A1, Ga, In, Tl, Zn, Cd, Hg verwendet werden. Bevorzugt werden die Magnesium- und Aluminiumorganyle verwendet.

Als Organyle werden die metallorganischen Verbindungen der genannten Elemente mit mindestens einer Metall-Kohlenstoff δ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich. Es können auch Mischungen verschiedener Metallorganyle verwendet werden.

Geeignete Magnesiumorganyle sind solche der Formel R₂Mg, wobei die Reste R unabhängig voneinander Wasserstoff, Halogen, C₁-C₂₀-Alkyl oder C₆-C₂₀-Aryl bedeuten. Bevorzugt werden Dialkylmagnesiumverbindungen, insbesondere die als Handelsprodukte verfügbaren Ethyl-, Propyl-, Butyl-, Hexyl- oder Octylverbindungen eingesetzt. Besonders bevorzugt wird das in Kohlenwasserstoffen lösliche (n-Butyl)(s-Butyl)magnesium oder (n-Butyl)(n-octyl)-magnesium eingesetzt.

Als Aluminiumorganyle können solche der Formel R₃Al verwendet werden, wobei die Reste R unabhängig voneinander Wasserstoff, Halogen, C₁-C₂₀-Alkyl oder C₆-C₂₀-Aryl bedeuten. Bevorzugte Aluminiumorganyle sind die Aluminiumtrialkyle wie Triethylaluminium, Triiso-butylaluminium (TIBA), Tri-n-butylaluminium, Tri-iso-propylaluminium, Tri-n-hexylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen. Beispiele sind Diethylaluminium-ethoxid, Diisobutylaluminium-ethoxid, Diisobutyl-(2,6-di-tert.-butyl-4-methyl-phenoxy)aluminium (CAS-Nr. 56252-56-3), Methylaluminoxan, isobutyliertes Methylaluminoxan, Isobutylaluminoxan, Tetraisobutyldialuminoxan oder Bis (diisobutyl) aluminiumoxid.

Es können auch verschiedene Magnesiumverbindungen oder Aluminiumverbindungen zusammen verwendet werden.

Besonders bevorzugt führt man die anionische Polymerisation in Gegenwart einer Trialkylaluminium- und/oder Dialkylmagnesiumverbindung durch.

Die molaren Verhältnisse der Lithiumverbindungen und der Magnesium- oder Aluminiumverbindung können in weiteren Bereichen variiert werden. Sie richten sich vor allem nach dem gewünschten Molekulargewicht, der gewünschten Polymerisationsgeschwindigkeit und der Polymerisationstemperatur sowie der Art und Menge der Monomeren. Zweckmäßigerweise liegt das molare Verhältnis von Magnesium oder Aluminium zu Alkalimetall im Bereich von 0,2 : 1 bis 5 : 1. Verwendet man Magnesium- und Aluminiumverbindungen gemeinsam, so führt man die Polymerisation bei einem molaren Verhältnis der Summe von Magnesium und Aluminium zu Lithium im Bereich von 0,2:1 bis 5:1 durch.

Nach Beendigung der Polymerisation können die lebenden Polymerketten mit einem Kettenabbruchmittel verschlossen werden. Als Kettenabbruchmittel eignen sich protonenaktive Substanzen oder Lewis-Säuren wie beispielsweise Wasser, Alkohole, aliphatische und aromatische Carbonsäuren sowie anorganische Säuren wie Kohlensäure oder Borsäure.

Die Styrol-Butadien-Blockcopolymere A können z.B. lineare Zweiblock-Copolymere S-B öder Dreiblock-Copolymere S-B-S bzw. B-S-B sein (S = Styrolblock, B = Butadienblock), wie man sie durch anionische Polymerisation nach an sich bekannten Verfahren erhält. Die Blockstruktur entsteht im wesentlichen dadurch, daß man zunächst Styrol alleine anionisch polymerisiert, wodurch ein Styrolblock entsteht. Nach Verbrauch der Styrolmonomere wechselt man das Monomere, indem man monomeres Butadien zufügt und anionisch zu einem Butadienblock polymerisiert (sog. sequentielle Polymerisation). Das erhaltene Zweiblockpolymere S-B kann durch erneuten Monomerenwechsel auf Styrol zu einem Dreiblockpolymeren S-B-S polymerisiert werden, falls gewünscht. Entsprechendes gilt sinngemäß für Dreiblockcopolymere B-S-B.

Bei den Dreiblockcopolymeren können die beiden Styrol-Blöcke gleich groß (gleiches Molekulargewicht, also symmetrischer Aufbau S₁₋B-S₁) oder verschieden groß (unterschiedliches Molekulargewicht also unsymmetrischer Aufbau S₁₋B-S₂) sein. Gleiches gilt sinngemäß für die beiden Butadien-Blöcke der Blockcopolymere B-S-B. Selbstverständlich sind auch Blockabfolgen S-S-B bzw. S₁-S₂-B, oder S-B-B bzw. S-B₁₋B₂, möglich. Vorstehend stehen die Indices für die Blockgrößen (Blocklängen bzw. Molekulargewichte). Die Blockgrößen hängen beispielsweise ab von den verwendeten Monomermengen und den Polymerisationsbedingungen.

Anstelle der kautschukelastischen "weichen" Butadienblöcke B oder zusätzlich zu den Blöcken B können auch Blöcke B/S stehen. Die Blöcke B/S sind ebenfalls weich und enthalten Butadien und Styrol, beispielsweise statistisch verteilt oder als tapered-Struktur (tapered = Gradient von Styrol-reich nach Styrol-arm oder umgekehrt). Falls das Blockcopolymere mehrere B/S-Blöcke enthält, können die Absolutmengen, und die relativen Anteile, an Styrol und Butadien in den einzelnen B/S-Blöcken gleich oder verschieden (ergebend unterschiedliche Blöcke (B/S)₁, (B/S)₂, etc.) sein. Die Blöcke B/S werden - unabhängig davon, ob ihr Aufbau statistisch oder tapered oder andersartig ist - zusammenfassend auch als "gemischte" Blöcke bezeichnet.

Als Styrol-Butadien-Blockcopolymere sind auch Vier- und Polyblockcopolymere geeignet.

Die genannten Blockcopolymere können eine (vorstehend beschriebene) lineare Struktur aufweisen. Jedoch sind verzweigte und sternförmige Strukturen bevorzugt. Verzweigte Blockcopolymere erhält man in bekannter Weise, z.B. durch Pfropfreaktionen von polymeren "Seitenästen" auf eine Polymer-Hauptkette.

Sternförmige Blockcopolymere sind z.B. durch Umsetzung der lebenden anionischen Kettenenden mit einem mindestens bifunktionellen Kopplungsmittel erhältlich. Solche Kopplungsmittel werden etwa in den US-PS 3 985 830, 3 280 0.84, 3 637 554 und 4 091 053 beschrieben. Bevorzugt sind epoxidierte Glyceride (z. B. epoxidiertes Leinsamenöl oder Sojaöl), Siliciumhalogenide wie SiCl₄, oder auch Divinylbenzol, außerdem polyfuktionelle Aldehyde, Ketone, Ester, Anhydride oder Epoxide. Carbonate wie Diethylcarbonat oder Ethylencarbonat (1,3-Dioxolan-2-on) sind ebenfalls bevorzugt. Speziell für die Dimerisierung eignen sich auch Dichlordialkylsilane, Dialdehyde wie Terephthalaldehyd und Ester wie Ethylformiat oder Ethylacetat.

Durch Kopplung gleicher oder verschiedener Polymerketten kann man symmetrische oder unsymmetrische Sternstrukturen herstellen, d.h. die einzelnen Sternäste können gleich oder verschieden sein, insbesondere verschiedene Blöcke S, B, B/S bzw. unterschiedliche Blockabfolgen enthalten. Weitere Einzelheiten zu sternförmigen Blockcopolymeren sind beispielsweise der WO-A 00/58380 zu entnehmen.

Beispielsweise verwendet man als Komponente A Styrol-Butadien-Blockcopolymere der nachfolgenden Ausführungsformen 1) bis 4):
1) ein unsymmetrisch sternförmig verzweigtes Styrol-Butadien-Blockcopolymer der allgemeinen Struktur i 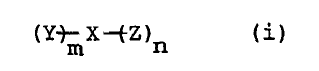
   - in der Y einen Blockcopolymerabschnitt aus wenigstens je einem Polystyrolblock der Molmasse 3000 bis 230 000 und einem Polybutadienblock der Molmasse 2000 bis 30 000 und
   - Z einen Blockcopolymerabschnitt aus wenigstens je einem Polystyrolblock der Molmasse 2000 bis 60 000 und einem Polybutadienblock der Molmasse 2000 bis 30 000 bedeutet;
   - wobei die Gesamtmolmasse von Y gleich 50 000 bis 250 000 und die Gesamtmolmasse von Z gleich 5000 bis 75 000 ist,
   - die Blockübergänge scharf oder verschmiert sind,
   - X den Rest eines Kopplungsmittels darstellt und
   - die Sternastzahl m+n insgesamt 3 bis 15 ist,
   - mit der Maßgabe, daß -m ≤ n ist.
2) ein symmetrisch oder unsymmetrisch sternförmig verzweigtes Styrol-Butadien-Blockcopolymer mit Styrolblöcken und gemischten Blöcken B/S aus Butadien und Styrol. Bevorzugt weist mindestens ein Sternast die Blockfolge S₁-(B/S)- und mindestens ein weiterer Sternast die Blockfolge S₂-(B/S)- auf, oder mindestens ein Ast die Blockfolge S₁-(B/S)-S₃- und mindestens ein Ast die Blockfolge S₂-(B/S)-S3-.
   Weitere bevorzugte Ausführungsformen 2) sind Blockcopolymere mit Strukturen, die mindestens einen Sternast mit der Blockfolge S₁-(B/S)₁-(B/S)₂- und mindestens einen Sternast mit der Blockfolge S₂-(B/S)₁-(B/S)₂- aufweisen, oder mindestens einen Sternast mit der Blockfolge S₁-(B/S)₁-(B/S)₂-S₃- und mindestens einen Sternast mit der Blockfolge S₂-(B/S)₁-(B/S)₂-S₃-. Dabei kann prinzipiell jeder außenliegend (endständige) Styrolblock S auch durch zwei oder mehr aufeinanderfolgende Styrolblöcke S₁-S₂ ersetzt sein, wodurch Blockfolgen S₁-S₂-(B/S)₁-(B/S)₂- bzw. S₁-S₂-(B/S)₂-(B/S)₂-S₃- entstehen.
   Ganz besonders bevorzugte Ausführungsformen 2) sind Blockcopolymere der folgenden Strukturen ii und iii 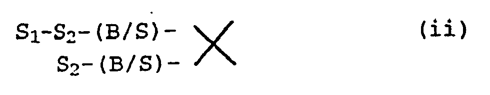 und 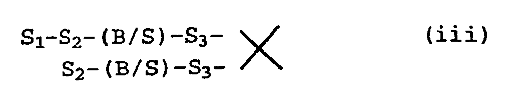
   worin X den Rest des Kopplungsmittels darstellt. Dabei kann anstelle des Blocks B/S auch eine Blockfolge (B/S)₁-(B/S)₂ stehen. Die in der WO-A 00/58380 auf Seite 8 in den Beispielen 6 bis 8 genannten Strukturen I und II und auf Seite 12 in den Beispielen 12 bis 19 genannten Strukturen Ib, IIb und III sind ebenfalls ganz besonders bevorzugt.
3) ein lineares Styrol-Butadien-Blockcopolymer mit mindestens zwei Styrolblöcken und mindestens einem Polybutadienblock, wobei für die Polystyrol- bzw. Polybutadienblöcke die vorstehend bei Ausführungsform 1) genannten Molmassenangaben gelten.
4) ein lineares Styrol-Butadien-Blockcopolymer mit mindestens zwei Styrolblöcken S und mindestens einem gemischten Block B/S aus Butadien und Styrol. Bevorzugt sind die beiden Styrolblöcke außenliegend (endständig), wobei die Styrolblocklängen gleich sein können, Struktur S₁-(B/S)-S₁, oder ungleich, Struktur S₁-(B/S)-S₂. Zwischen den Styrolblöcken können anstelle eines gemischten Blocks B/S auch n gemischte Blöcke (B/S)₁ bis n stehen. Bei z.B. drei gemischten Blöcken liegt demnach eine Struktur S₁-(B/S)₁-(B/S)₂-(B/S)₃-S₁ oder S₁-(B/S)₁-(B/S)₂-(B/S)₃-S₂ vor.

Eine mögliche Ausführungsform 4) ist ein Blockcopolymer der Struktur S₁-(B/S)-S₁, wobei besonders bevorzugt die beiden Styrolblöcke S₁ jeweils etwa 16 Gew.-% des Blockcopolymeren und der gemischte B/S-Block etwa 68 Gew.-% des Blockcopolymeren ausmacht. Ganz besonders bevorzugt beträgt der Butadiengehalt dieses Blockcopolymeren etwa 35 Gew.-%. Dieses Polymer hat das Eigenschaftsprofil thermoplastischer Elastomere (TPE).

Weitere Einzelheiten der unter 2) und 4) beschriebenen Ausführungsformen kann der Fachmann der WO-A 00/58380 entnehmen, darin insbesondere den Seiten 3 bis 4.

Besonders bevorzugt weist das Blockcopolymer eine sternförmige Struktur auf, beispielsweise entsprechend den vorstehenden Ausführungsformen 1) und 2).

Die vorstehend gebrauchten Monomerbezeichnungen Styrol bzw. Butadien stehen beispielhaft auch für andere Vinylaromaten bzw. Diene.

Die erfindungsgemäßen thermoplastischen Formmassen sind in der Regel transparent, oder zumindest opak (durchscheinend) . Üblicherweise haben sie aufgrund des Styrolmonomeranteils von mindestens 50 Gew.-% in Komponente A, zäh-steife Eigenschaften - im Gegensatz zu Styrol-Butadien-Blockcopolymeren mit weniger als 50 Gew.-% Styrol, die in der Regel elastomere bzw. weiche Eigenschaften aufweisen.

### Komponente B

Komponente B ist mit einem Anteil von 0,001 bis 0,18 bevorzugt 0,01 bis 0,15, insbesondere 0,02 bis 0,1 Gew.-% in den Formmassen enthalten. Ganz besonders bevorzugt beträgt der Anteil von B 0,05 bis 0,1, insbesondere 0,06 bis 0,08 Gew.-%, bezogen auf die Formmasse.

Komponente B ist ein Benzofuranonderivat. Unter Benzofuranonderivat sollen alle Verbindungen verstanden werden, die Benzofuranon als Strukturelement enthalten.

Bevorzugt verwendet man als Benzofuranonderivat B Benzofuran-2-on-Verbindungen, besonders bevorzugt 3-Arylbenzofuran-2-one.

Geeignet sind insbesondere die in der US-PS 5 516 920 beschriebenen Verbindungen, siehe darin auch die Einzelverbindungen No. 101 bis 121 und 201 bis 212 in Spalten 43 bis 54.

Weiterhin sind die in der US-PS 5 428 162 beschriebenen Verbindungen geeignet, siehe darin auch die Einzelverbindngen No. 101 bis 144 in Spalten 33 bis 50.

Außerdem sind die in der GB-A 2 333 296 genannten Verbindungen geeignet.

Die Herstellung der Benzofuranonderivate B erfolgt in an sich bekannter Weise durch Umsetzung von Phenolverbindungen mit Derivaten der Mandelsäure und ist in den vorgenannten drei Schriften beschrieben.

Ganz besonders bevorzugt ist das Benzofuranonderivat B eine Verbindung der Formel Ia 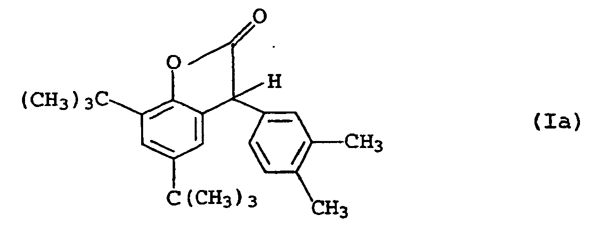 oder der Formel Ib 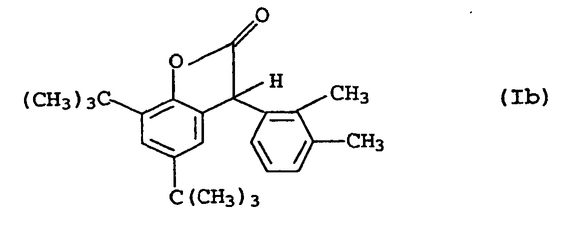 oder deren Mischung, ist.

Die Verbindungen Ia und Ib sind Isomere und unterscheiden sich in der Position der Methylgruppen am Phenylrest.

Wird eine Mischung der Verbindungen Ia und Ib verwendet, so beträgt das Gewichtsverhältnis Ia:Ib bevorzugt 75:25 bis 95:5, insbesondere 80:20 bis 90:10, besonders bevorzugt etwa 85:15.

Das Benzofuranonderivat der Formel Ia bzw. Ib ist gemäß Beispiel 11 in Spalte 41 bis 42 der bereits genannten US-PS 5 516 920 erhältlich und als HP 136 von Ciba Specialty Chemicals im Handel. Es handelt sich bei HP 136 um eine Mischung aus 85 Gew.-Teilen Verbindung Ia und 15 Gew.-Teilen Verbindung Ib.

### Komponente C

Komponente C ist mit einem Anteil von 0,05 bis 1, bevorzugt 0,1 bis 0,8, insbesondere 0,2 bis 0,5 Gew.-% in den Formmassen enthalten. Ganz besonders bevorzugt beträgt der Anteil von C etwa 0,4 Gew.-%, bezogen auf die Formmasse.

Komponente C ist ein organisches Phosphit. Geeignet sind beispielsweise organische Phosphite 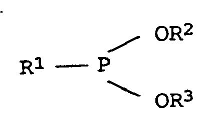 und 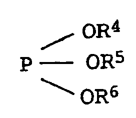 mit R¹ = H oder organischer Rest, R² bis R⁶ = gleiche oder verschiedene organische Reste. Unter Phosphiten sollen auch Phosphonite verstanden werden.

Besonders geeignete Phosphite und Phosphonite sind zum Beispiel Triphenylphosphit,
Diphenylalkylphosphite,
Phenyldialkylphosphite,
Tris(nonylphenyl)phosphit,
Trilaurylphosphit,
Trioctadecylphosphit,
Distearylpentaerythritdiphosphit,
Tris(2,4-di-tert-butylphenyl)phosphit,
Diisodecylpentaerythritdiphosphit,
Bis (2,4-di-tert-butylphenyl) pentaerythritdiphosphit,
Bis(2,6-di-tert-butyl-4-methylphenyl)pentaerythritdiphosphit,
Diisodecyloxypentaerythritdiphosphit,
Bis-(2,4-di-tert-butyl-6-methylphenyl)pentaerythritdiphosphit,
Bis(2,4,6-tris(tert-butylphenyl)pentaerythritdiphosphit,
Tristearylsorbittriphosphit,
Tetrakis(2,4-di-tert-butylphenyl)-4,4'-biphenylendiphosphonit,
6-Isooctyloxy-2,4,8,10-tetra-tert-butyl-12-H-dibenz[d,g]-1,3,2-dioxaphosphocin,
Bis(2,4-di-tert-butyl-6-methylphenyl)methylphosphit,
Bis(2,4-di-tert-butyl-6-methylphenyl)ethylphosphit,
6-Fluor-2,4,8,10-tetra-tert-butyl-12-methyldibenz[d,g]-1,3,2-dioxaphosphocin,
*2,2',2"*-Nitrilo [triethyltris (3,3',5,5'-tetra-tert-butyl-1,1'-biphenyl-2,2'-diyl)phosphit],
2 -Ethylhexyl (3,3', 5, 5' -tetra-tert-butyl-1,1' -biphenyl -2,2' -diyl) - phosphit und
5-Butyl-5-ethyl-2-(2,4,6- tri-tert-butylphenoxy)-1,3,2-dioxaphosphiran.

Die Phosphite C sind bekannt und handelsüblich. Ihre Herstellung erfolgt in an sich bekannter Weise.

Besonders bevorzugt verwendet man Triarylphosphite wie Triphenylphosphit, Tris(2,4-di-tert-butylphenyl)phosphit und Tris(nonylphenyl)phosphit (TNPP).

Ganz besonders bevorzugt ist das organische Phosphit C eine Verbindung der Formel II 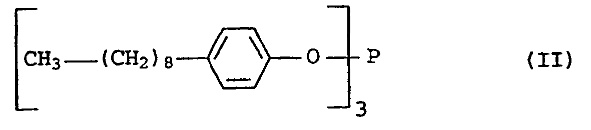 also TNPP.

Die Verbindung II, TNPP, ist im Handel beispielsweise als Irgafos@ TNPP von Ciba Specialty Chemicals erhältlich.

### Komponente D

Komponente D ist mit einem Anteil von 0,1 bis 0,3, bevorzugt 0,12 bis 0,25, insbesondere 0,13 bis 0,22 Gew.-% in den Formmassen enthalten. Ganz besonders bevorzugt beträgt der Anteil von D 0,14 bis 0,21 Gew.-%, bezogen auf die Formmasse.

Die Komponente D ist eine Stabilisatorverbindung D ausgewählt aus sterisch gehinderten Phenolen und aromatischen Aminen. Stabilisatorverbindung D ist demnach ein primäres Antioxidans, das vermutlich als Fänger von Sauerstoff-Radikalen wirkt.

Besonders geeignete sterisch gehinderte Phenole sind beispielsweise die nachfolgenden Verbindungsgruppen Nr. 1 bis 12:
1. Alkylierte Monophenole, zum Beispiel 2,6-Di-tert-butyl-4-methylphenol, 2-tert-Butyl-4,6-dimethylphenol, 2,6-Di-tertbutyl-4-ethylphenol, 2,6-Di-tert-butyl-4-n-butylphenol, 2,6-Di-tert-butyl-4-isobutylphenol, 2,6-Dicyclopentyl-4-methylphenol, 2-(a-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in den Seitenketten linear oder verzweigt sind, zum Beispiel, 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Gemische davon.
2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2, 6-Didodecylthiomethyl-4-nonylphenol.
3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroayanisol, 3,5-Di-tert-butyl-4-hydroxyanisol, 3,5-Di-tert-butyl-4-hydroxyphenylstearat, Bis-(3,5-di-tert-butyl-4-hydrox-yphenyl)adipat.
4. Hydroxylierte Thiodiphenylether, zum Beispiel 2,2*'*-Thiobis (6-tert-butyl-4-methylphenol), 2,2'-Thiobis(4-octylphenol), 4,4*'*-Thiobis (6-tert-butyl-3-methylphenol), 4,4'-Thiobis(6-tert-butyl-2-methylphenol), 4,4'-Thiobis- (3, 6-di-secamylphenol), 4,4'-Bis(2,6-dimethyl-4-hydroxyphenyl)disulfid.
5. Alkylidenbisphenole, zum Beispiel 2,2'-Methylenbis(6-tert-butyl-4-methylphenol), 2,2'-Methylenbis(6-tert-butyl-4-ethylphenol), 2,2-Methylenbis[4-methyl-6-(a-methylcyclohexyl)phenol], 2,2'-Methylenbis(4-methyl-6-cycloheaylphenol), 2,2'-Methylenbis(6-nonyl-4-methylphenol), 2,2'-Methylenbis(4,6-di-tert-butylphenol), 2,2'-Ethylidenbis(4,6-di-tert-butylphenol), 2,2'-Ethylidenbis(6-tert-butyl-4-isobutylphenol), 2,2'-Methylenbis[a-methylbenzyl)-4-nonylphenol], 2,2'Methylenbis[6-(a,a-dimethylbenzyl)-4-nonylphenol], 4,4'-Methylenbis(2,6-di-tert-butylphenol), 4,4*'*-Methylenbis (6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycolbis[3,3-bis(3'-tertbutyl-4'-hydroxyphenyl)butyrat], Bis(3-tert-butyl-4-hydroxy-5-methylphenyl)dicyclopentadien, Bis[2-(3'-tert-butyl-2'-hydroxy-5'-methylbenzyl)6-tert-butyl-4-methylphenyl]terephthalat, 1,1-Bis-(3,5-dimethyl-2-hydroxyphenyl)butan, 2,2-Bis-(3,5-di-tert-butyl-4-hydroxyphenyl)propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)pentan.
6. Hydroxybenzylierte Malonate, zum Beispiel Dioctadecyl-2,2-bis -(3,5-di-tert-butyl-2-hydroxybenzyl)malonat, Dioctadecyl-2-(3-tert-butyl-4-hydroxy-5-methylbenzyl)-malonat, Didodecylmercaptoethyl-2,2-bis-(3,5-di-tert-butyl-4-hydroxybenzyl)malonat, Bis(4-(1,1,3,3-tetramethylbutyl)phenyl]-2,2-bis(3,5-di-tert-butyl-4-hydroxybenzyl)malonat.
7. Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.
8. Ester von β-(3,5-Di-tert-butyl-4-hydroxyphenyl)propionsäure mit ein- oder mehrwertigen Alkoholen, beispielsweise mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
9. Ester von β-(5-tert-Butyl-4-hydroxy-3-methylphenyl)propionsäure mit ein- oder mehrwertigen Alkoholen, beispielsweise mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
10. Ester von β-(3,5-DicyclohexyI-4-hydroxyphenyl)propionsäure mit ein- oder mehrwertigen Alkoholen, beispielsweise mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
11. Ester von 3,5-Di-tert-butyl-4-hydroxyphenylessigsäure mit ein- oder mehrwertigen Alkoholen, beispielsweise mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N*'*-Bis(hydroxyethyl) oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
12. Amide von β-(3,5-Di-tert-butyl-4-hydroxyphenyl)propionsäure beispielsweise N,N'-Bis-(3,5-di-tert-butyl-4-hydroxyphenylpropionyl)hexamethylendiamid, N,N'-Bis (3,5-di-tert-butyl-4-hydroxyphenylpropionyl)trimethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl]propionyloxy)-ethyl]oxamid.

Besonders geeignete (insbesondere sekundäre) aromatische Amine sind beispielsweise N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis (1-ethyl-3-methylpentyl)-p-phenylendiamin; N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N-phenyl-p-phenylendiamin, N-(1,3-Dimethylbutyl)-N-phenyl-p-phenylendiamin, N-(1-Methylheptyl)-N'-phenyl-p-phenylendiamin, N-cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1- naphthylamin, N-Phenyl-2-naphthylamin, octyliertes Diphenylamin, zum Beispiel p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan 4,4'-Diaminodiphenylmethan, N,N,N',N-Tetramethyl- 4,4'-diaminodiphenylmethan, 1,2-Bis[(2-methylphenyl)amino]ethan, 1,2-Bis(phenylamino)propan,-(o-Tolyl)biguanid, Bis [4-(1',3'-di-methylbutyl)phenylamin, tert-octyliertes N-Phenyl-1-naphthylamin, ein Gemisch von mono- und dialkylierten tert-Butyl-tert- Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl- 4-H-1,4-benzothiazin, Phenothiazin, ein Gemisch von mono- und dialkylierten tert-Butyl-tert-Octylphenothiazinen, ein Gemisch von mono- und dialkylierten tert-Octylphenothiazinen, N-Allylphenothiazin, N,N,N,N'-Tetraphenyl-1,4-diaminobut-2-en, N,N-Bis(2,2,6,6-tetramethylpiperid-4-yl)-hexamethylendiamin, Bis(2,2,6,6-tetramethylpiperid-4-yl)sebacat, 2,2,6,6-Tetramethylpiperidin-4-on, 2,2,6,6-Tetramethylpiperidin-4-ol.

Benzylamine wie Tris(3,5-di-tert-butyl-4-hydroxybenzyl)amin, und Acylaminophenole wie 4-Hydroxylauranilid, 4-Hydroxystearanilid oder Octyl-N-(3,5-di-tert-butyl-4-hydroxyphenyl)carbamat, sind ebenfalls besonders geeignet.

Zu den besonders geeigneten Stabilisatorverbindungen D zählen au-ßerdem sterisch gehinderte Phenole und aromatische Amine, die Triazin als Strukturelement enthalten. Solche Triazinverbindungen sind z.B. 2,4-Bis(octylmercapto)-6-(3,5-di-tert-butyl-4-hydroxyanilino)-1,3,5-triazin, 2-Octylmercapto-4, 6-bis (3, 5-di-tert-butyl-4-hydroxyanilino)-1,3,5-triazin, 2-Octylmercapto-4,6-bis(3,5-di-tert-butyl-4-hydroxyphenoxy)-2,3,5-triazin, 2,4,6-Tris-(3,5-di-tert-butyl-4-hydroxyphenoxy)-1,2,3-triazin, 1,3,5-Tris-(3,5-di-tert-butyl-4-hydrohybenzyl) isocyanurat, 1,3,5-Tris(4-tert-butyl-3-hydroxy-2,6-dimethylbenzyl) isocyanurat, 2,4,6-Tris-(3,5-di-tert-butyl-4-hydroxyphenylethyl)-1,3,5-triazin, 1,3,5-Tris(3,5-di-tert-butyl-4-hydrohyphenylpropionyl)hexahydro-1,3,5-triazin, 1,3,5-Tris(3,5-dicyclohexyl-4-hydroxybenzyl)isocyanurat.

Die Stabilisatorverbindungen D sind bekannt und handelsüblich oder lassen sich in an sich bekannter Weise herstellen.

Besonders bevorzugt verwendet man als Stabilisatorverbindungen D sterisch gehinderte Phenole, insbesondere Ester von β-(3,5-Di-tert-butyl-4-hydroxyphenyl) propionsäure, siehe vorstehend unter Nr. 8.

Ganz besonders bevorzugt ist die Stablisatorverbindung D ein sterisch gehindertes Phenol der Formel III 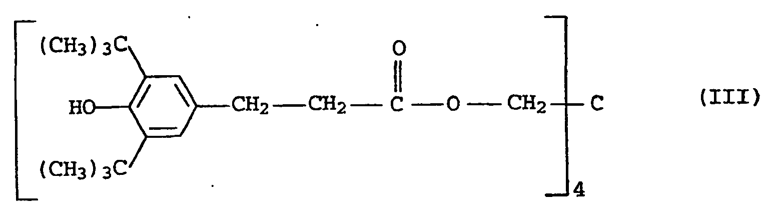 oder der Formel IV 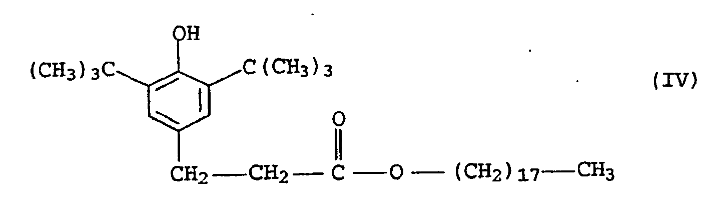 oder deren Mischung.

Verbindung II ist Pentaerythritol-tetrakis([3-(3,5-di-tert-butyl-4-hydroxyphenyl)propionat], und Verbindung IV ist n-Octadecyl-[3-(3,5-di-tert-butyl-4-hydroxyphenyl)propionat.

Verwendet man Verbindung III als Komponente D, so beträgt der Anteil an der Formmasse bevorzugt 0,13 bis 0,17, insbesondere 0,14 bis 0,16 und besonders bevorzugt etwa 0,15 Gew.-%.

Verwendet man Verbindung IV als Komponente D, so beträgt der Anteil an der Formmasse bevorzugt 0,18 bis 0,22, insbesondere 0,10 bis 0,21 und besonders bevorzugt etwa 0,2 Gew.-%.

Verbindung III ist z.B. als Irganox® 1010, und Verbindung IV ist z.B. als Irganox® 1076 (beide von Ciba Specialty Chemicals) im Handel erhältlich.

Insbesondere verwendet man als Komponente D allein die Verbindung III.

Es versteht sich, dass anstelle eines einzigen Benzofuranonderivats B auch mehrere Benzofuranonderivate B₁, B₂, etc., verwendet werden können. Die Mengenanteile für B gelten im letzten Fall für die Summe aller n Komponenten B₁ bis Bₙ.

Vorstehendes gilt sinngemäß ebenso für Komponente C, organische Phosphite, und Komponente D, Stabilisatorverbindungen (sterisch gehinderte Phenole und/oder aromatische Amine).

Bevorzugt beträgt in den erfindungsgemäßen Formmassen das Mengenverhältnis von Stabilisatorverbindung D zu Benzofuranonderivat B 3:1 bis 1:1, insbesondere 2,5:1 bis 1:1.

Es besteht die Vorstellung, dass das Benzofuranonderivat B als 5 Fänger von Kohlenstoffradikalen wirkt, die am Alterungsprozess des Blockcopolymeren beteiligt sind. Das organische Phosphit C wirkt vermutlich als Fänger von Sauerstoff O₂, der ebenfalls die Alterung mitverursacht. Die Stabilisatorverbindung D wirkt offenbar als Fänger von Sauerstoff-Radikalen, die gleichfalls an der Polymeralterung beteiligt sind.

Optionale weitere Komponenten

Die Formmassen können zusätzlich zu den Komponenten A bis D weitere Komponenten enthalten.

Dies sind insbesondere übliche, von den vorgenannten Komponenten A bis D verschiedene Zusatzstoffe und Verarbeitungshilfsmittel wie z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Geeignete Gleit- und Entformungsmittel sind z.B. Stearinsäuren, Stearylalkohol, Stearinsäureester oder -amide, Metallstearate, Montanwachse und solche auf Basis von Polyethylen und Polypropylen.

Pigmente sind beispielsweise Titandioxid, Phthalocyanine, Ultramarinblau, Eisenoxide oder Ruß, sowie die Klasse der organischen Pigmente. Unter Farbstoffen sind alle Farbstoffe zu verstehen, die zur transparenten, halbtransparenten oder nichttransparenten Einfärbung von Polymeren verwendet werden können. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Als weitere Antioxidantien geeignet sind Verbindungen, die von den vorgenannten Komponenten B bis D verschieden sind.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-is(hydroxyalkyl)alkylamine oder -alkylenamine, Polyethylenglycolester oder Glycerinmono- und -distearate, sowie deren Mischungen.

Die einzelnen Zusatzstoffe werden in den jeweils üblichen Mengen verwendet, so daß sich nähere Angaben hierzu erübrigen.

### Herstellung der Formmassen

Die Herstellung der refindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander bei Temperaturen von 180 bis 280°C. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Ebenso kann man einzelne Komponenten vormischen, oder einige bzw. alle Komponenten in Lösung mischen und das Lösungsmittel danach wieder entfernen, z.B. in Eindampfextrudern.

Die Komponenten B, C und D können in jeder bekannten Weise dem Blockcopolymeren A zugefügt werden, z.B. in reiner Form direkt bei der Aufarbeitung der Reaktionsmischung, die bei der Herstellung des Blockcopolymeren erhalten wird, oder bei der Verarbeitung des Blockcopolymeren zu Formteilen, Folien, etc. Jedoch kann man ebenso eine oder mehrere der Komponenten B bis D mit dem Polymeren vormischen, entweder als Feststoff oder in Lösung, wobei man die Lösung in üblicher Weise vom Lösungsmittel befreit, z.B. durch Entgasen. Gleichfalls kann man die Komponenten B bis D als Masterbatch (Konzentrat aus Polymer und hohen Mengen B, C und/oder D) zudosieren.

Erfindungsgemäß stellt man die Formmassen derart her, daß sie nicht basisch eingestellt sind.

Die Formmassen sind neutral bis schwach sauer eingestellt. Dies wird durch geeignete Maßnahmen bei der Herstellung der Formmassen erreicht. Es besteht die Vorstellung, daß die Wirkung der Stabilisatoren (Komponenten B bis D) unter neutralen bis schwach sauren Bedingungen verbessert ist.

Dabei bedeutet neutral bis schwach sauer eingestellt, daß die Formmassen einen pH-Wert von 3 bis 7, besonders bevorzugt von 5 bis 6 aufweisen. Herstellung umfasst den gesamten Prozess von den Monomeren bis zur fertigen Formmasse, also beispielsweise die Polymerisation der Monomeren zum Blockcopolymeren A, die Zugabe der Komponenten B bis D, das Zufügen und Entfernen von Polymerisationshilfsstoffen, und das Abmischen und Konditionieren zur fertigen Formmasse. Demnach umfasst die Herstellung insbesondere auch die Aufarbeitung des Blockcopolymeren zur Formmasse, und die Konditionierung der Formmasse zum Endprodukt.

Man stellt die Formmasse neutral bis schwach sauer ein, indem man as Blockcopolymer A, das auf die Formmasse in üblicher Weise aufgearbeitet wird, auf einen entsprechenden pH-Wert einstellt. Zu diesem Zweck fügt man während der Herstellung der Formmasse (inklusive der Aufarbeitung auf die Formmasse), CO₂ und Wasser hinzu.

Gegenstand der Erfindung ist demnach ein Verfahren zur Herstellung der Formmassen gemäß den Ansprüchen 1 bis 7, wobei während der Herstellung die Formmasse durch Zugabe von CO₂ und Wasser neutral bis schwach sauer eingestellt wird.

In einer bevorzugten Ausführungsform werden CO₂ und Wasser nach der Polymerisation des Blockcopolymeren A zugefügt: aus den Styrol- und Dienmonomeren wird in einem Polymerisationsreaktor das Blockcopolymere A hergestellt, und man kann beispielsweise das CO₂ und Wasser der im wesentlichen ausreagierten Reaktionsmischung zudosieren, die im Reaktor vorliegt oder die man dem Reaktor entnimmt (also nach der Polymerisation).

Man kann zusammen mit CO₂/Wasser auch eine oder mehrere der Komponenten B, C und D zufügen, falls gewünscht.

In einer besonders bevorzugten Ausführungsform wird CO₂ und/oder Wasser in einem späteren Stadium der Herstellung der Formmasse, insbesondere in einem späteren Stadium der Aufarbeitung, erneut zudosiert. Beispielsweise kann man beim Entfernen des Lösungsmittels, das bei der Polymerisation des Blockcopolymeren mitverwendet wurde, oder beim Abmischen der Komponenten A bis D, erneut CO₂ und/oder Wasser zudosieren. Eine erneute Zudosierung kann insbesondere dann vorteilhaft sein, wenn durch die Aufarbeitung das CO₂ und/oder das Wasser ganz oder teilweise wieder verloren geht.

Die Herstellung der erfindungsgemäßen Formmassen durch Zugabe von CO₂ und Wasser in an sich bekannter Weise ist derart auszugestalten, daß während der gesamten Aufarbeitung keine basischen Bedingungen, sondern neutrale bis schwach saure Bedingungen vorherrschen.

So ist es beispielsweise vorteilhaft, vor dem Entfernen des bei der Polymerisation verwendeten Lösungsmittels einen CO₂-Druck einzustellen, der höher ist als der Dampfdruck des zu entfernenden Lösungsmittels, damit auch bei der Lösungsmittelabtrennung ausreichend CO₂ in der Reaktionsmischung vorhanden ist, um die Mischung im neutralen bis schwach sauren Bereich zu halten.

In der Regel gibt man CO₂ und Wasser gemeinsam zu. Jedoch ist auch eine getrennte Zugabe möglich. Ebenso kann man bei der erneuten Zugabe Wasser oder CO₂ alleine zudosieren, je nachdem, ob Wasser oder CO₂ bei der Aufarbeitung verloren geht.

In einer anderen, ebenfalls bevorzugten Ausführungsform erfolgt die Zugabe von CO₂ und Wasser als Konditionierung der bei der Aufarbeitung erhaltenen Formmasse, d.h. als Nachbehandlung der Formmasse. Durch diese Nachbehandlung entsteht das Endprodukt, die fertige Formmasse.

Dazu wird die Formmasse (in der Regel nach dem Erstarren bzw. Abkühlen) in Gegenwart von Wasser und CO₂ getempert. Unter Tempern soll eine Lagerung für eine gewisse Zeit bei einer definierten Temperatur, die meist über Raumtemperatur liegt, verstanden werden.

Es wurde gefunden, dass eine Temperung bei 20 bis 60°C, insbesondere 30 bis 50°C, bevorzugt etwa 40°C, und 10 bis 200, insbesondere 40 bis 100, bevorzugt 60 bis 80 Stunden, vorteilhaft ist.

Bevorzugt liegt die Formmasse bei der Konditionierung (Temperung) in zerteilter Form vor, etwa als Granulat, Pulver oder Chips vor.

Das Tempern lässt sich in einfacher Weise durchführen, indem man die Formmasse und Wasser in einem geschlossenen Rührbehälter vorlegt, den Reaktor auf die Temperungstemperatur aufheizt und CO₂ zudosiert. Zweckmäßigerweise wird die Polymer-Wasser-Mischung gerührt. Um den CO₂-Gehalt des Wassers zu erhöhen, kann man unter CO₂-Überdruck tempern.

Auf besonders einfache Weise kann man tempern, indem man die beispielsweise granulatartige Formmasse in einem Trockenschrank bei der Temperungstemperatur in Gegenwart von Wasser(dampf) und CO₂ lagert. Dabei kann man zweckmäßigerweise CO₂ als festes CO₂ (Trockeneis), und Wasser mittels eines wassergefüllten offenen Behälters (Schale, Becherglas) oder eines wassergetränkten Gewebes (nasses Tuch), in den Trockenschrank geben.

Man kann die beiden vorgenannten Ausführungsformen des Zufügens von CO₂ und Wasser auch kombinieren, d.h. sowohl der Reaktionsmischung CO₂ und Wasser zufügen als auch die granulierte Formmasse mit CO₂ und Wasser nachbehandeln (konditionieren).

Der pH-Wert des angesäuerten Wassers beträgt 3 bis 7, insbesondere 5 bis 6.

Formmassen, die wie vorstehend beschrieben unter Zugabe von CO₂ und Wasser hergestellt wurden, weisen in der Regel eine hellere Eigenfarbe auf, insbesondere einen verminderten Gelbstich. Das Formmassengranulat bzw. -pulver und die daraus hergestellten Formkörper, Folien, Filme, Fasern und Schäume sind durch das Tempern farblos und nicht gelbstichig.

Die thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Formkörpem, Folien, Filmen, Fasern und Schäumen verwendet werden. Diese Verwendung ist ebenfalls Gegenstand der Erfindung. Unter Filmen sind sowohl (dünne) Folien, als auch Oberflächenbeschichtungen, zu verstehen.

Die Erfingsgemäßen Folien und Filme eignen sich u.a. auch wegen Ihrer guten Bedruckbarkeit, zu Verpackungszwekken, z.B. für Lebensmittelverpackungen. Ebenso sind sie als Schrumpffolien geeignet. Solche Schrumpffolien werden z.B. bei der Verpackung von Kleinteilen, oder fertig bedruckt als Etikettierung und Verschlußversiegelung von Behältern (Getränkeflaschen, Dosen, Tiegel, etc.) verwendet. Die Folien und Filme eignen sich weiterhin als Tiefziehfolien, sowie als Dehn- und Clingfolien. Insbesondere die selbsthaftenden Clingfolien werden als Frischhaltefolien für Lebensmittel verwendet.

Die erfindungsgemäßen Formmassen haben aufgrund der geringen Stabilisatorgehalte ökonomische Vorteile gegenüber den Formmassen des Standes der Technik. Trotz der geringeren Stabilisatormengen sind sie zuverlässig gegen Alterung und gegen Abbaureaktionen bei der Verarbeitung, geschützt. Dies gilt insbesondere auch bei hohen Temperaturen und bei hohen Scherkräften.

Der Gelgehalt der Formmassen ist gering. Hervorzuheben ist, dass die Formmassen auch bei Verarbeitungstemperaturen von 200 bis 280°C und hoher Scherung (z.B. durch Extrusion) eine deutlich geringere Gelbildung aufweisen.

Insbesondere ist die Stabilisatormischung (Komponenten B bis D) mit den erfindungsgemäßen Mengenanteilen der Komponenten B, C und D wirksamer als die - aus dem Stand der Technik bekannte - Verwendung einer einzelnen Komponente B oder C oder D.

Durch die geringeren Stabilisatormengen erzielt man außerdem eine geringere Globalmigration. Die Globalmiggration ist die Summe aller migrationsfähigen Bestandteile und sollte z.B. für Lebensmittelverpackungen möglichst gering sein.

Dies macht die erfindungsgemäßen Blockcopolymere besonders geeignet für Lebensmittelanwendungen, z.B. als Lebensmittelverpakkungsfolie oder -Schale (tray), Trinkbecher, Getränkeflaschen, Besteck, Teller, Frischhaltefolie usw.

### Beispiele

### 1. Herstellung der Formmassen enthaltend ein sternförmiges Styrol-Butadien-Blockcopolymer

Die Einsatzstoffe wurden mittels Aluminiumoxid-Perlen gereinigt und getrocknet, soweit erforderlich. Es bedeuten:
- s-BuLi:: 12 gew.-%ige Lösung von sec-Butyllithium in Cyclohexan, gebrauchsfertige Lösung von Fa. Chemmetall,
- Polystyrol:: kautschukfreies Polystyrol, hergestellt durch radikalische Polymerisation, mit einem zahlenmittleren Molekulargewicht Mₙ von 96 000 und einem gewichtsmittleren Molekulargewicht M_{w} von 272 000, ermittelt mit Gelpermeationschromatographie und Polystyrol-Kalibrationsstandards (PS-Standard-Kit von Polymer Laboratories). Es wurde das Handelsprodukt Polystyrol® 158K von BASF verwendet.
- Edenol:: ein epoxidiertes Leinsamenöl als Kopplungsmittel; es wurde das Handelsprodukt Edenol®.B 316 von Henkel verwendet.
- Acrawax:: ein handelsübliches Fettsäureamid; es wurde das Handelsprodukt Acrawax® von Lonza verwendet.
- Weißöl:: es wurde das Mineralöl Winok® 70 von Wintershall verwendet.

Es wurden folgende Stabilisatoren verwendet:
- B:: Benzofuranonderivat-Mischung aus 85 Gew.-Teilen der Verbindung der bereits genannten Formel Ia und 15 Gew.-Teilen der Verbindung der bereits genannten Formel Ib. Es wurde das Handelsprodukt HP 136 von Ciba Specialty Chemicals verwendet.
- C:: Organisches Phosphit der bereits genannten Formel II, also TNPP. Es wurde ein übliches Handelsprodukt verwendet.
- D:: Sterisch gehindertes Phenol der bereits genannten Formel III. Es wurde das Handelsprodukt Irganox® 1010 von Ciba Specialty Chemicals verwendet.

Sternförmige Styrol-Butadien-Blockcopolymere der bereits erwähnten Struktur ii 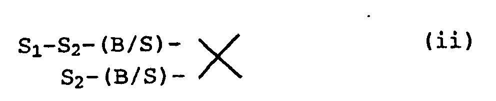 wurden durch sequentielle anionische Polymerisation von Styrol und Butadien in Cyclohexan als Lösungsmittel und anschließender Kopplung erhalten. Dazu wurde in einem mit Stickstoff gespülten 1500 1-Rührreaktor unter Rühren 509 kg Cyclohexan und 78 kg Styrol (für den Block S₁) vorgelegt, auf 40°C erwärmt, und zur Beseitigung von Verunreinigungen mit s-BuLi-Lösung austritriert. Anschließend wurde zur Herstellung des Blocks S₁ die Polymerisation durch Zugabe von 600 g s-BuLi-Lösung initiiert und die Reaktionsmischung nach Erreichen der Maximaltemperatur auf 60°C gekühlt. Danach wurde zur Herstellung des Blocks S₂ durch Zusatz von 2100 g s-BuLi-Lösung initiiert und 47 kg Styrol zugegeben, und nach Erreichen der Maximaltemperatur auf 50°C temperiert. Anschließend gab man zur Herstellung des Blocks B/S gleichzeitig 52 kg Butadien und 26 kg Styrol als getrennte Zuläufe hinzu. Nach Erreichen der Maximaltemperatur ließ man 10 min nachreagieren. Schließlich wurde zur Kopplung der erhaltenen Blockcopolymere 540 ml Edenol zugefügt, auf 55°C temperiert und 10 min nachreagieren gelassen.

Danach wurden der erhaltenen Polymerlösung 1000 ml Wasser unter schnellem Rühren zugefügt, nach 5 min erneut 1000 ml Wasser und nach weiteren 5 min wiederum 1000 ml Wasser. Anschließend wurde 20 min lang CO₂-Gas in die Lösung geleitet, wodurch sie schwach sauer eingestellt wurde.

Dieser sauer eingestellte Polymerlösung wurden danach eine Mischung von 1700 g Stabilisator C und 1000 ml Cyclohexan zugegeben, ebenso eine Lösung von 470 g Acrawax in 3000 ml Cyclohexan, und schließlich 4300 g Weißöl. Man rührte 10 min nach.

Die erhaltene Polymerlösung wurde schließlich portionsweise (für jedes Beispiel eine Portion) auf einem Zweiwellen-Entgasungsextruder ZSK 40 von Werner + Pfleiderer, Stuttgart, vom Lösungsmittel Cyclohexan befreit und zugleich mit den weiteren Stabilisatoren B und D versetzt. Dem Extruder wurden bei 200°C zugeführt:
- 100 kg/h der Polymerlösung (entspricht 29 kg/h Blockcopolymer),
- 3,92 kg/h Polystyrol, und
- die Stabilisatoren B und D in solchen Mengen, daß die erhaltene Formmasse die in der Tabelle angegebenen Anteile an B und D enthielt.

Die Formmasse wurde extrudiert und nach dem Abkühlen granuliert.

Anschließend wurden jedes der erhaltenen Granulate mit CO₂ und Wasser konditioniert (nachbehandelt). Dazu wurden 100 g Granulat bei 40°C in einem geschlossenen Trockenschrank, der CO₂-Trockeneis und ein wassergetränktes Tuch enthielt, 72 Stunden lang gelagert. Man erhielt ein farbloses, transparentes Granulat.

### 2. Prüfung der Formmassen auf Alterungsbeständigkeit

Um die Stabilität der erhaltenen stabilisierten Blockcopolymere gegen Alterung zu ermitteln, wurden die erhaltenen Granulate mittels Rheographie untersucht. Es wurde der Rheograph 2000 von Göttfert, Buchen, verwendet.

### Zum Meßprinzip ist folgendes zu sagen:

Bei der Rheographie wird das Polymer - ähnlich wie bei der Messung der Schmelze-Volumenrate MVR bzw. des Schmelze-Volumenindex MVI - in einem beheizten, mit einer Austrittsdüse versehenen Behälter aufgeschmolzen. Die Schmelze wird mittels eines Kolbens, der sich mit konstantem Vorschub bewegt, (also nicht mittels einer aufgelegten Last wie beim MVR bzw. MVI) durch die Düse gedrückt. Bei konstantem Kolbenvorschub wird der Schmelzedruck gemessen. Im Verlauf der Meßzeit setzt infolge der thermisch-oxidativen Alterung des Polymers eine Vernetzung der Kautschukphase ein. Dadurch steigt die Schmelzeviskosität und damit auch der Schmelzedruck an.

Die Wirkung eines Stabilisators kann an einem gegenüber dem nicht stabilisierten Polymeren (mehr oder weniger stark) zeitlich verzögerten Anstieg des Schmelzedrucks erkannt werden. Als Maß für die Alterungsstabilität und damit als Maß für die Wirksamkeit der Stabilisierung gilt die Druckdifferenz zwischen Beginn (Zeit t = t₀) und Ende (t = t_{E}) der Meßzeit, der sogenannte Vernetzungsdruck pᵥ. Es gilt pᵥ = P (t_{E}) - P (t₀).

Je geringer die Druckdifferenz, desto weniger stieg der Schmelzedruck bzw. die Schmelzeviskosität an, d.h. desto weniger vernetzte die Kautschukphase, d.h. desto geringer war die Polymeralterung. Demnach gilt: je kleiner der Vernetzungsdruck pᵥ, desto wirksamer ist die Stabilisierung.

Die Schmelzetemperatur bei der Rheographie betrug 270°C.

In der nachfolgenden Tabelle sind die Zusammensetzungen und Ergebnisse zusammengefasst. Dabei ist der Anteil von Blockcopolymer A der an 100 Gew.-% fehlende Prozentanteil.

**Tabelle: Zusammensetzung und Ergebnisse (V zum Vergleich)**

| Beispiel | Zusammensetzung [Gew.-%]¹⁾ | | | Vernetzungsdruck pᵥ [bar] |
|---|---|---|---|---|
| | Benzofuranon B | Phosphit C | geh. Phenol D | |
| 1V | 0,08 | 0,4 | - | 17 |
| 2V | 0,1 | 0,4 | - | 12 |
| 3V | 0,12 | 0,4 | - | 10 |
| 4V | 0,14 | 0,4 | - | 8 |
| 5V | 0,16 | 0,4 | - | 9 |
| 6 | 0,1 | 0,4 | 0,3 | 10 |
| 7 | 0,1 | 0,4 | 0,2 | 10 |
| 8 | 0,1 | 0,4 | 0,15 | 12 |
| 9 | 0,1 | 0,4 | 0,1 | 7 |
| 10 | 0,07 | 0,4 | 0,2 | 9 |
| 11 | 0,07 | 0,4 | 0,15 | 5 |
| 12 | 0,07 | 0,4 | 0,1 | 6 |
| 13 | 0,05 | 0,4 | 0,2 | 7 |

| | | | | |
|---|---|---|---|---|
| 1) An 100 Gew.-% fehlender Anteil ist Blockcopolymer A | | | | |

Die Tabelle zeigt, dass die Blockcopolymere genau dann eine wirksame Stabilisierung gegen Alterung aufweisen (erkennbar an einem geringen Vernetzungsdruck pᵥ), wenn die Mengen der einzelnen Stabilisatoren B, C und D in den erfindungsgemäß niedrigen Bereichen liegen.

## Patentansprüche

1. Verfahren zur Herstellung von thermoplastischen Formmassen enthaltend, wobei sich die Summe zu 100 Gew.-% ergänzt,
a) mindestens ein Blockcopolymer A, enthaltend in polymerisierter Form, bezogen auf A,
a1) 50 bis 90 Gew.-% mindestens eines Styrolmonomeren, und
a2) 10 bis 50 Gew.-% mindestens eines Dienmonomeren,
und als Stabilisatoren, bezogen auf die Formmasse,
b) 0,001 bis 0,18 Gew.-% mindestens eines Benzofuranonderivats B,
c) 0,05 bis 1 Gew.-% mindestens eines organischen Phosphits C, und
d) 0,1 bis 0,3 Gew.-% mindestens einer Stabilisatorverbindung D ausgewählt aus sterisch gehinderten Phenolen und aromatischen Aminen, **dadurch gekennzeichnet, dass** während der Herstellung die Formmasse durch Zugabe von CO₂ und Wasser auf einen pH-Wert von 3 bis 7 eingestellt wird.

2. Verfahren nach Anspruch 1, **dadurch gekennzeichnet, dass** das Blockcopolymer A ein Styrol-Butadien-Blockcopolymer ist.

3. Verfahren nach den Ansprüchen 1 bis 2, **dadurch gekennzeichnet, dass** das Blockcopolymer A eine sternförmige Struktur aufweist.

4. Verfahren nach den Ansprüchen 1 bis 3, **dadurch gekennzeichnet, dass** das Benzofuranonderivat B eine Verbindung der Formel Ia 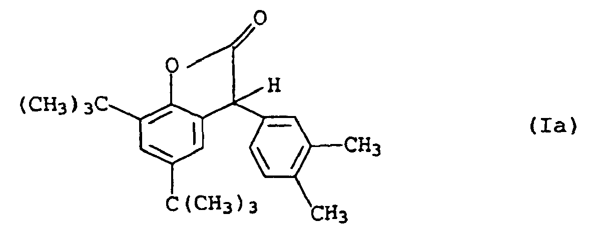 oder der Formel Ib 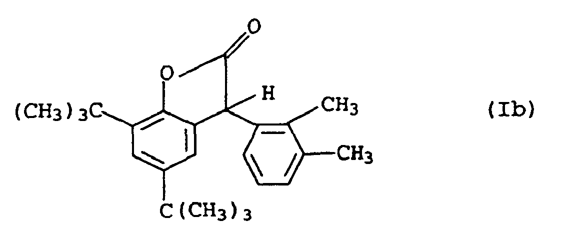 oder deren Mischung, ist.

5. Verfahren nach den Ansprüchen 1 bis 4, **dadurch gekennzeichnet, dass** das organische Phosphit C eine Verbindung der Formel 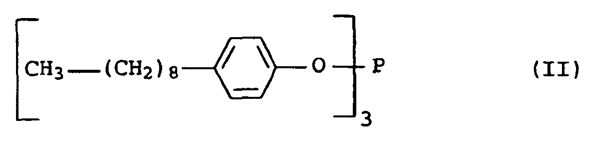 ist.

6. Verfahren nach den Ansprüchen 1 bis 5, **dadurch gekennzeichnet, dass** die Stabilisatorverbindung D ein sterisch gehindertes Phenol der Formel III 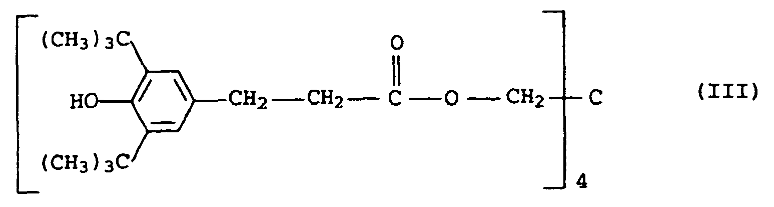 oder der Formel IV 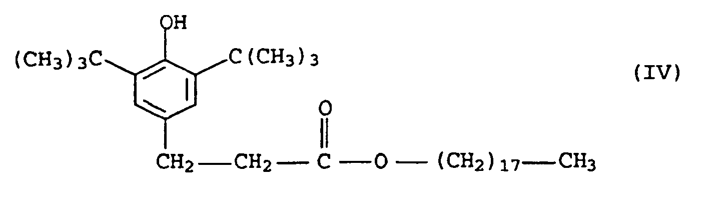 oder deren Mischung, ist.

7. Verfahren nach den Ansprüchen 1 bis 6, **dadurch gekennzeichnet, dass** das Mengenverhältnis von Stabilisatorverbindung D zu Benzofuranonderivat B von 3:1 bis 1:1 Gewichtsteile beträgt.

## Claims

1. A process for the preparation of thermoplastic molding compositions comprising, where the total is 100% by weight,
a) at least one block copolymer A comprising, in polymerized form, based on A,
a1) from 50 to 90% by weight of at least one styrene monomer, and
a2) from 10 to 50% by weight of at least one diene monomer,
and, as stabilizers, based on the molding composition,
b) from 0.001 to 0.18% by weight of at least one benzofuranone derivative B,
c) from 0.05 to 1% by weight of at least one organic phosphite C, and
d) from 0.1 to 0.3% by weight of at least one stabilizer compound D selected from sterically hindered phenols and aromatic amines, which comprises setting a pH of the molding composition at from 3 to 7 via addition of CO₂ and water during the preparation process.

2. The process according to claim 1, wherein the block copolymer A is a styrene-butadiene block copolymer.

3. The process according to claim 1 or 2, wherein the block copolymer A has a star-shaped structure.

4. The process according to any of claims 1 to 3, wherein the benzofuranone derivative B is a compound of the formula Ia 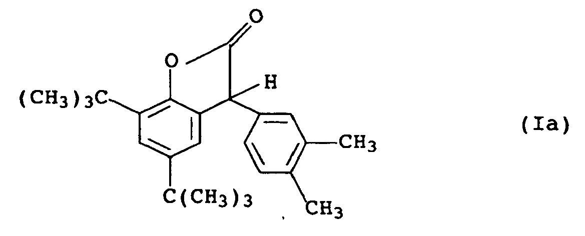 or of the formula Ib 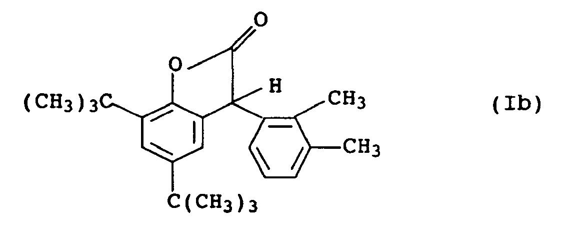 or a mixture of these.

5. The process according to any of claims 1 to 4, wherein the organic phosphite C is a compound of the formula

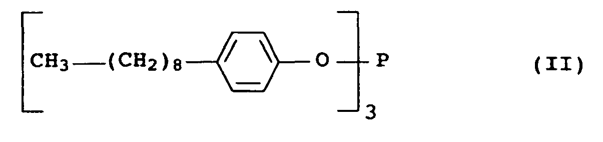

6. The process according to any of claims 1 to 5, wherein the stabilizer compound D is a sterically hindered phenol of the formula III 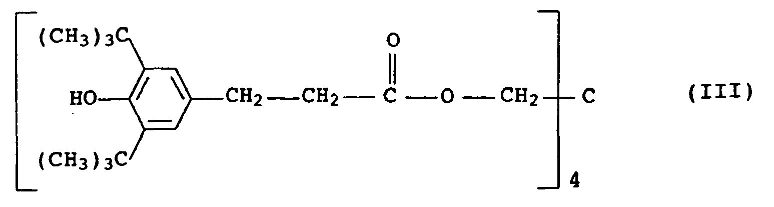 or of the formula IV 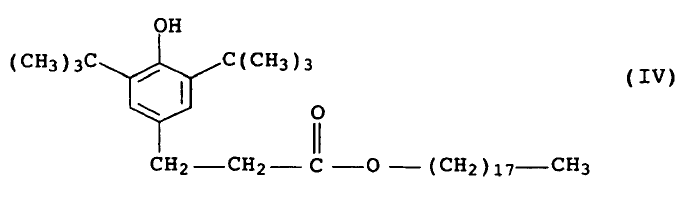 or a mixture of these.

7. The process according to any of claims 1 to 6, wherein the ratio of the amount of stabilizer compound D to that of benzofuranone derivative B is from 3:1 to 1:1 parts by weight.

## Revendications

1. Procédé de fabrication de masses de moulage thermoplastiques contenant, sur la base d'un total de 100% en poids :
a) au moins un polymère séquencé A contenant sous forme polymérisée, par rapport à A,
a1) 50 à 90% en poids d'au moins un monomère de styrène et
a2) 10 à 50% en poids d'au moins un monomère de diène
et, comme stabilisateurs, par rapport à la masse de moulage,
b) 0,001 à 0,18% en poids d'au moins un dérivé de benzofurannone B,
c) 0,05 à 1% en poids d'au moins un phosphite organique C, et
d) 0,1 à 0,3% en poids d'au moins un composé stabilisateur D, choisi parmi les phénols à empêchement stérique et les amines aromatiques, **caractérisé en ce que**, durant la fabrication, on règle la masse de moulage par addition de CO₂ et d'eau à une valeur de pH de 3 à 7.

2. Procédé selon la revendication 1, **caractérisé en ce que** le copolymère séquencé A est un copolymère à séquences de styrène-butadiène.

3. Procédé selon les revendications 1 et 2, **caractérisé en ce que** le copolymère séquencé A présente une structure étoilée.

4. Procédé selon les revendications 1 à 3, **caractérisé en ce que** le dérivé de benzofurannone B est un composé de formule Ia : 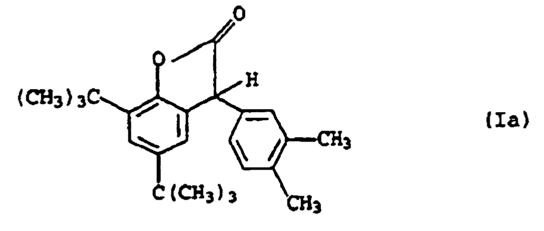 ou de formule Ib : 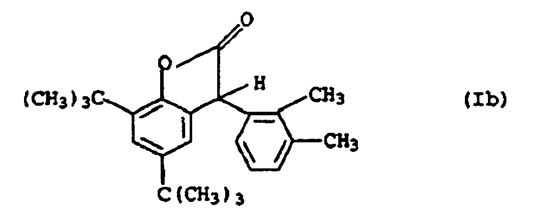 ou leur mélange.

5. Procédé selon les revendications 1 à 4, **caractérisé en ce que** le phosphite organique C est un composé de formule suivante :

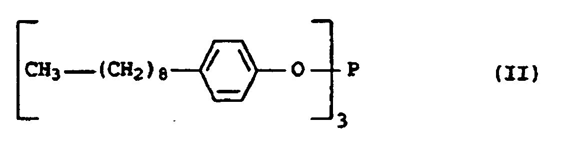

6. Procédé selon les revendications 1 à 5, **caractérisé en ce que** le composé stabilisateur D est un phénol à empêchement stérique de formule III : 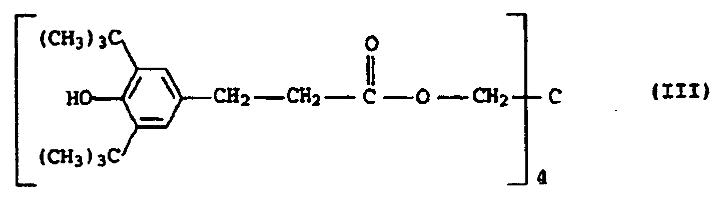
ou de formule IV : 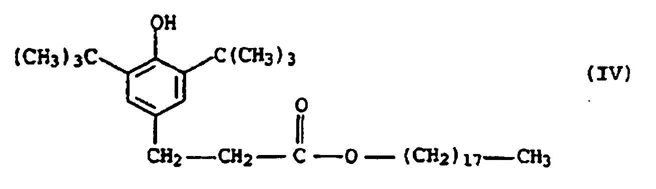
ou leur mélange.

7. Procédé selon les revendications 1 à 6, **caractérisé en ce que** le rapport quantitatif du composé stabilisateur D au dérivé de benzofurannone B est de 3:1 à 1:1 parties en poids.
